# FASCICULE DE BREVET EUROPEEN

(11) **EP 4 226 343 B1**
(45) Date de publication et mention de la délivrance du brevet: **19.08.2026**
(21) Numéro de dépôt: 21786932.0
(22) Date de dépôt: 05.10.2021
(51) Int. Cl.: G07F 7/08, G06Q 20/34, G06K 7/10, G06K 19/07

(54) **TERMINAL DE PAIEMENT ÉLECTRONIQUE ET PROCÉDÉ DE DÉTECTION D'UN MODE DE PAIEMENT CORRESPONDANT**
ELEKTRONISCHES ZAHLUNGSENDGERÄT UND VERFAHREN ZUR ERKENNUNG EINES ENTSPRECHENDEN ZAHLUNGSMODUS
ELECTRONIC PAYMENT TERMINAL AND METHOD FOR DETECTING A CORRESPONDING PAYMENT MODE

(30) Priorité: 06.10.2020 FR 2010200
(43) Date de publication de la demande: 16.08.2023
(73) Titulaire: Banks and Acquirers International Holding, 75015 Paris (FR)
(72) Inventeur: LEMAIRE, Jean-Eric, 26000 Valence (FR); BERTHIAUD, Olivier, 07130 CORNAS (FR)
(74) Mandataire: LLR
(86) Numéro de dépôt international: PCT/EP2021/077377
(87) Numéro de publication internationale: WO 2022/073968

(56) Documents cités:
- EP-A1- 3 082 061
- EP-A1- 3 220 312
- EP-A1- 3 462 396
- EP-A2- 2 107 495
- EP-A2- 2 544 123
- US-A1- 2008 061 942
- US-A1- 2014 049 361
- US-A1- 2016 335 461
- US-A1- 2017 344 999
- US-A1- 2019 332 828
- US-B1- 10 318 952

## Description

### Domaine de l'invention

Le domaine de l'invention est celui des dispositifs de paiement électronique, tels que des terminaux de paiement électronique, permettant plusieurs modes de paiement par carte : lecture de la puce d'une carte insérée dans une fente prévue à cet effet, lecture de la piste magnétique d'une carte coulissant dans un espace prévu à cet effet et lecture sans contact par approche de la carte à proximité de l'antenne (via le logo correspondant).

### Art antérieur et ses inconvénients

On s'attache donc plus particulièrement dans la suite de ce document à décrire une problématique existante dans le domaine des terminaux de paiement électronique à laquelle ont été confrontés les inventeurs de la présente demande de brevet, relative aux déclenchements des différents modes de paiement possible.

En effet, lorsqu'un terminal de paiement électronique permet au moins deux modes de paiements (par exemple un paiement par insertion de carte et un paiement sans contact), les fonctionnalités relatives à ces différents modes de paiement doivent être opérationnelles quel que soit le choix de paiement de l'utilisateur et sans que celui-ci n'ait besoin d'indiquer ce choix au préalable. Il s'agit de déclencher de manière « implicite » la fonctionnalité correspondant au choix de l'utilisateur. Ainsi, si l'utilisateur choisit un paiement par insertion de sa carte à puce, il l'approche du terminal de paiement électronique, avant de l'insérer, et la fonctionnalité de paiement sans contact ne doit pas être déclenchée à l'approche de la carte à puce de l'utilisateur.

Or, le paiement sans contact est régi notamment par la norme EMV (pour Europay MasterCard Visa) qui spécifie, entre autres, le champ magnétique nécessaire à la fonctionnalité de paiement sans contact. La norme EMV actuelle requiert par exemple que le champ électrique soit suffisamment important pour que les cartes puissent être lues à plus de quatre centimètres du terminal de paiement électronique, sur un large volume.

Cette contrainte engendre potentiellement des interférences pour les autres fonctionnalités du terminal de paiement électronique, impliquant par exemple d'éloigner le plus possible l'antenne de certains autres composants électroniques.

Or, la compacité des terminaux de paiement électronique étant de plus en plus recherchée, il devient difficile de concevoir l'architecture d'un terminal de paiement électronique en tenant compte de ces différentes contraintes.

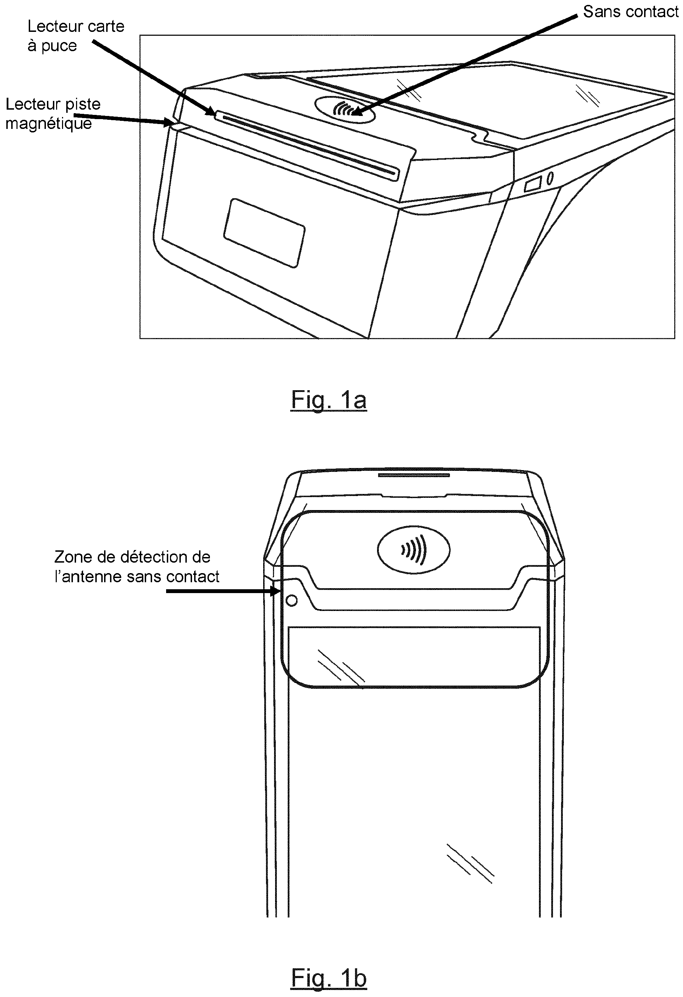

De ce fait, pour des architectures très compactes de terminal de paiement électronique, les différents lecteurs de carte (carte à puce, carte à piste magnétique (encore appelé « swipe » en anglais) et sans contact) sont implémentés à proximité immédiate, comme illustré par exemple en figure **Fig 1a****.** Cette architecture qui induit qu'une carte pouvant être utilisée à la fois pour du paiement sans contact et du paiement avec contact (par lecture de la puce ou de la piste magnétique) est détectée et lue par le lecteur sans contact avant même qu'elle ne soit insérée dans le lecteur de carte à puces ou le lecteur de piste magnétique. En effet, la zone de détection de l'antenne pour le paiement sans contact, illustrée par exemple en figure **Fig 1b**, est suffisamment étendue pour pouvoir détecter l'approche d'une carte pour un paiement via l'un ou l'autre des lecteurs (carte à puce ou carte à piste magnétique). Ce type de situation peut ainsi engendrer l'initiation de la procédure de paiement sans contact sans que l'utilisateur n'ait choisi ce mode de paiement, ou alors une erreur de transaction impliquant des ralentissements d'un point de vue utilisateur.

Le document US 2019/0332828 A1 concerne une communication NFC entre une machine de service (par exemple une machine à laver) et un dispositif mobile. Une fois que le dispositif mobile est en contact via une communication à courte portée avec le lecteur NFC, la portée du lecteur NFC peut être modifiée pour une portée de communication plus grande.

Le document EP 2 107 495 A2 concerne un lecteur NFC/RFID comportant deux bobines d'antenne. L'une des bobines d'antenne est utilisée comme bobine d'activation (wake-up) pour activer l'autre bobine d'antenne afin d'effectuer une transaction RFID.

Le document US 2017/0344999 A1 concerne un dispositif mobile utilisé comme dispositif de paiement à un terminal de paiement. Le dispositif mobile peut effectuer un paiement en mode MST ou en mode NFC. Le dispositif mobile comporte plusieurs bobines permettant de détecter le mode de paiement avec le terminal de paiement.

Le document EP 3 082 061 A1 concerne un lecteur NFC comportant un détecteur de proximité qui détecte une carte proche du lecteur afin d'activer le lecteur NFC.

Le document US 10,318,952 B1 concerne un lecteur de carte avec un mode de lecture par contact, un mode de lecture de piste magnétique et un mode de lecture NFC, un détecteur de proximité étant utilisé pour activer l'interface de lecture correspondante.

Le document US 2016/0335461 A1 concerne un lecteur de carte avec un mode de lecture par contact, un mode de lecture de piste magnétique et un mode de lecture NFC. Le lecteur de carte comporte des contacts discriminateurs à l'intérieur du lecteur permettant de déterminer le type de carte présent dans le lecteur.

Il existe donc un besoin pour une technique qui permette la lecture implicite de carte sans contact, via la puce ou la bande magnétique, avec des architectures compactes de terminaux de paiement électronique et de lecteurs de cartes.

### Exposé de l'invention

La présente technique répond à ce besoin en proposant un terminal de paiement défini par la revendication 1

Ainsi, la présente technique propose une solution nouvelle et inventive pour la détection d'un mode de paiement lorsqu'un utilisateur approche sa carte de paiement d'un terminal de paiement électronique, tout en préservant une architecture compacte du terminal de paiement électronique. Pour ce faire, le terminal de paiement électronique comprend, en plus de l'antenne principale dédiée au paiement sans contact, au moins une antenne additionnelle permettant de détecter l'approche de la carte et d'en déduire si l'utilisateur souhaite un paiement sans contact ou en insérant sa carte dans l'un ou l'autre des lecteurs disponibles sur le terminal de paiement électronique (lecteur de la puce ou lecture de la piste magnétique). Cette détection est notamment mise en œuvre par la comparaison du signal reçu par l'antenne additionnelle avec un seuil, et l'activation de l'antenne principale si la comparaison est positive. Le basculement entre l'antenne additionnelle et l'antenne principale peut être mise en œuvre par différentes techniques décrites ci-après.

Selon une caractéristique particulière, les moyens de sélection (20) et d'activation et de désactivation (30) de l'antenne principale correspondent à un commutateur recevant en entrée un signal reçu par la première antenne additionnelle et un signal reçu par l'antenne principale et délivrant en sortie l'un ou l'autre des signaux reçus par la première antenne additionnelle et par l'antenne principale, et les moyens de comparaison (40) sont mis en œuvre dans au moins un module de contrôle et traitement sans contact (10) recevant en entrée l'un ou l'autre des signaux reçus par la première antenne additionnelle et par l'antenne principale, i.e. l'un ou l'autre des signaux délivrés en sortie du commutateur.

Ainsi, la solution est mise en œuvre via un commutateur permettant de basculer d'une antenne sur l'autre, et ainsi d'analyser d'abord le signal reçu sur l'antenne additionnelle, avant de traiter celui reçu par l'antenne principale si un paiement sans contact est détecté. Cette mise en œuvre est simple et peu coûteuse, un seul « chip contacless » (module de contrôle et traitement sans contact) étant nécessaire pour analyser les signaux reçus respectivement par l'antenne additionnelle et l'antenne principale.

Selon une autre variante de réalisation, le terminal de paiement électronique comprend en outre un deuxième module de contrôle et traitement sans contact (11) associé à la première antenne additionnelle et les moyens de sélection (20) et d'activation et de désactivation (30) de l'antenne principale (AP) sont mis en œuvre dans le processeur (CPU).

Ainsi, la solution est mise en œuvre via un deuxième « chip contactless » dédié à l'antenne additionnelle et c'est le CPU du terminal de paiement électronique qui met en œuvre le basculement entre le traitement du signal reçu par l'antenne additionnelle et le traitement du signal reçu par l'antenne principale.

Selon un autre mode de réalisation, le terminal de paiement électronique comprend en outre une deuxième antenne additionnelle (AA2) telle que définie par la revendication 4.

Ce deuxième mode de réalisation met en œuvre deux antennes additionnelles, avantageusement positionnées et paramétrées, afin d'affiner la détection du mode de paiement, de sorte à ce que le mode de paiement sans contact soit détecté si un signal est détecté sur les deux antennes additionnelles alors que le mode de paiement sans contact est détecté si un signal est détecté sur une seule des deux antennes additionnelles. Plusieurs variantes de réalisation sont décrites ci- après.

Selon une première variante, les moyens de sélection (20) et d'activation et de désactivation (30) de l'antenne principale correspondent à un commutateur recevant en entrée un signal reçu par la première antenne additionnelle et un signal reçu par la deuxième antenne additionnelle et un signal reçu par l'antenne principale et délivrant en sortie l'un ou l'autre des signaux reçus par la première antenne additionnelle, la deuxième antenne additionnelle ou l'antenne principale, et les moyens de comparaison sont mis en œuvre dans au moins un module de contrôle et traitement sans contact (10) recevant en entrée l'un ou l'autre des signaux reçus par la première antenne additionnelle, la deuxième antenne additionnelle ou l'antenne principale, i.e. l'un ou l'autre des signaux délivrés par le commutateur.

Ainsi, la solution est mise en œuvre via un commutateur permettant de basculer d'une antenne sur l'autre, et ainsi d'analyser d'abord le signal reçu sur les antennes additionnelles, avant de traiter celui reçu par l'antenne principale si un paiement sans contact est détecté. Cette mise en œuvre est simple et peu coûteuse, un seul « chip contacless » (module de contrôle et traitement sans contact) étant nécessaire pour analyser les signaux reçus respectivement par les antennes additionnelles et l'antenne principale.

Selon une deuxième variante, le terminal de paiement électronique comprend en outre un deuxième module de contrôle (14) associé aux première et deuxième antennes additionnelles et les moyens de sélection (20) et d'activation et de désactivation (30) de l'antenne principale correspondent à un commutateur recevant en entrée un signal reçu par la première antenne additionnelle et un signal reçu par la deuxième antenne additionnelle et délivrant en sortie l'un ou l'autre des signaux reçus par la première antenne additionnelle ou la deuxième antenne additionnelle et les moyens de comparaison (40) sont mis en œuvre dans le processeur (CPU).

Ainsi, comme pour la deuxième variante du premier mode de réalisation, la solution est mise en œuvre via un deuxième « chip contactless » dédié aux antennes additionnelles et c'est le CPU du terminal de paiement électronique qui met en œuvre le basculement entre le traitement du signal reçu respectivement par l'une et l'autre des antennes additionnelles et le signal reçu par l'antenne principale. Selon une troisième variante, le terminal de paiement électronique comprend en outre un deuxième module de contrôle et traitement sans contact (11) associé à la première antenne additionnelle et un troisième module de contrôle et traitement sans contact (12) associé à la deuxième antenne additionnelle et les moyens de sélection (20) et d'activation et de désactivation (30) de l'antenne principale (AP) sont mis en œuvre dans le processeur (CPU).

Selon cette troisième variante, un « chip contactless » est dédié à chacune des antennes additionnelles et c'est le CPU du terminal de paiement électronique qui met en œuvre le basculement entre le traitement du signal reçu respectivement par l'une et l'autre des antennes additionnelles et le signal reçu par l'antenne principale.

La présente technique concerne également un procédé de détection d'un mode de paiement électronique défini par la revendication 8.

Un tel procédé est notamment mis en œuvre dans un terminal de paiement électronique selon les différents modes de réalisation décrits précédemment et permet de discriminer le mode de paiement choisi par l'utilisateur selon l'approche de sa carte de paiement.

Selon un aspect particulier, le procédé comprend en outre une étape de désactivation de la première antenne additionnelle, lorsqu'un mode de paiement sans contact est détecté. Cette étape est notamment mise en œuvre lorsqu'un commutateur est utilisé pour le basculement entre les différentes antennes.

Selon une caractéristique particulière selon laquelle le terminal de paiement électronique comprend en outre une deuxième antenne additionnelle apte à recevoir un signal émis par la carte de paiement électronique, le procédé (défini par la revendication 10) comprend en outre une deuxième étape de comparaison d'un niveau de signal reçu en provenance de la carte de paiement électronique par la deuxième antenne additionnelle avec un deuxième seuil prédéterminé délivrant un deuxième résultat de comparaison, et l'étape d'activation de l'antenne principale pour la mise en œuvre d'une transaction sans contact entre le terminal de paiement électronique et la carte de paiement électronique est déclenchée si le deuxième résultat de comparaison est positif.

Selon un aspect particulier, le procédé comprend en outre une étape de désactivation de la deuxième antenne additionnelle, lorsqu'un mode de paiement sans contact est détecté. Cette étape est notamment mise en œuvre lorsqu'un commutateur est utilisé pour le basculement entre les différentes antennes.

Selon une implémentation préférée, les différentes étapes du procédé selon l'invention sont mises en œuvre par un ou plusieurs logiciels ou programmes d'ordinateur, comprenant des instructions logicielles destinées à être exécutées par un processeur de données d'un terminal de paiement électronique selon la présente technique et étant conçu pour commander l'exécution des différentes étapes du procédé, mis en œuvre au niveau du terminal de paiement électronique.

En conséquence, l'invention vise aussi des programmes, susceptibles d'être exécutés par un ordinateur ou par un processeur de données, ces programmes comportant des instructions pour commander l'exécution des étapes du procédé tel que mentionnés ci-dessus. Un programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La présente technique vise aussi un support d'informations lisible par un processeur de données, et comportant des instructions d'un programme tel que mentionné ci-dessus. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur ou un SSD. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Selon un mode de réalisation, la présente technique est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, set- top-box, routeur, etc.) et est susceptible d'accéder aux ressources matérielles de cette entité physique (mémoires, supports d'enregistrement, bus de communication, cartes électroniques d'entrées/sorties, interfaces utilisateur, etc.). De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc. Chaque composante du système précédemment décrit met bien entendu en œuvre ses propres modules logiciels.

Les différents modes de réalisation mentionnés ci-dessus sont combinables entre eux pour la mise en œuvre de l'invention.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****Fig 1a****]** illustre une vue en perspective d'une partie d'un terminal de paiement électronique, selon l'art antérieur ;
**[****Fig 1b****]** illustre une vue de face d'une partie d'un terminal de paiement électronique, selon l'art antérieur
**[****Fig 2a****]** illustre une vue de face d'une partie d'un terminal de paiement électronique, selon un premier mode de réalisation de l'invention ;
**[****Fig 2b****]** illustre un exemple de schéma de mise en œuvre d'une première variante du premier mode de réalisation tel qu'illustré en figure **Fig 2a** ;
**[****Fig 2c****]** illustre un exemple de schéma de mise en œuvre d'une deuxième variante du premier mode de réalisation tel qu'illustré en figure **Fig 2a** ;
**[****Fig 3a****]** illustre une vue de face d'un lecteur de carte de paiement électronique, selon un deuxième mode de réalisation de l'invention ;
**[****Fig 3b****]** illustre un exemple de schéma de mise en œuvre d'une première variante du deuxième mode de réalisation tel qu'illustré en figure **Fig 3a**
**[****Fig 3c****]** illustre un exemple de schéma de mise en œuvre d'une deuxième variante du deuxième mode de réalisation tel qu'illustré en figure **Fig 3a** ;
**[****Fig 3d****]** illustre un exemple de schéma de mise en œuvre d'une troisième variante du deuxième mode de réalisation tel qu'illustré en figure **Fig 3a** ; et
**[****Fig 4****]** illustre les principales étapes d'un procédé de détection d'un mode de paiement électronique, selon un mode de réalisation.

### Description détaillée de modes de réalisation de l'invention

Le principe général de l'invention repose sur la mise en œuvre d'au moins une antenne additionnelle de détection d'approche d'une carte de paiement, permettant de discriminer en amont le mode de paiement choisi par l'utilisateur (parmi le paiement sans contact, le paiement par lecture d'une carte à puce insérée dans un lecteur de carte dédié ou le paiement par lecture d'une carte à puce magnétique coulissant dans un lecteur de carte dédié) en fonction de la zone d'approche détectée de la carte.

Pour ce faire, la ou les antennes additionnelles, positionnées stratégiquement dans le terminal de paiement électronique par rapport à l'antenne principale de paiement sans contact et aux zones d'approche de la carte selon les modes de paiement, mesure(nt) des niveaux de signal reçu en provenance de la carte en approche du terminal de paiement électronique. La détection du mode de paiement est ensuite basée sur ces mesures de niveaux de signal reçu ou des calculs de niveaux différentiels de signal reçu par des antennes distinctes.

De plus, la solution technique repose sur le traitement des signaux reçus de la ou des antennes additionnelles sans que le signal reçu par l'antenne principal de paiement sans contact ne soit traité, de manière à ne pas initier la procédure de paiement sans contact avant d'avoir établi que l'utilisateur souhaite effectivement faire un paiement sans contact. Ainsi, de cette manière, le terminal de paiement électronique n'initie pas de dialogue entre la carte de paiement en approche et l'antenne principale tant qu'il n'a pas déterminé que le choix de l'utilisateur est d'effectuer un paiement sans contact.

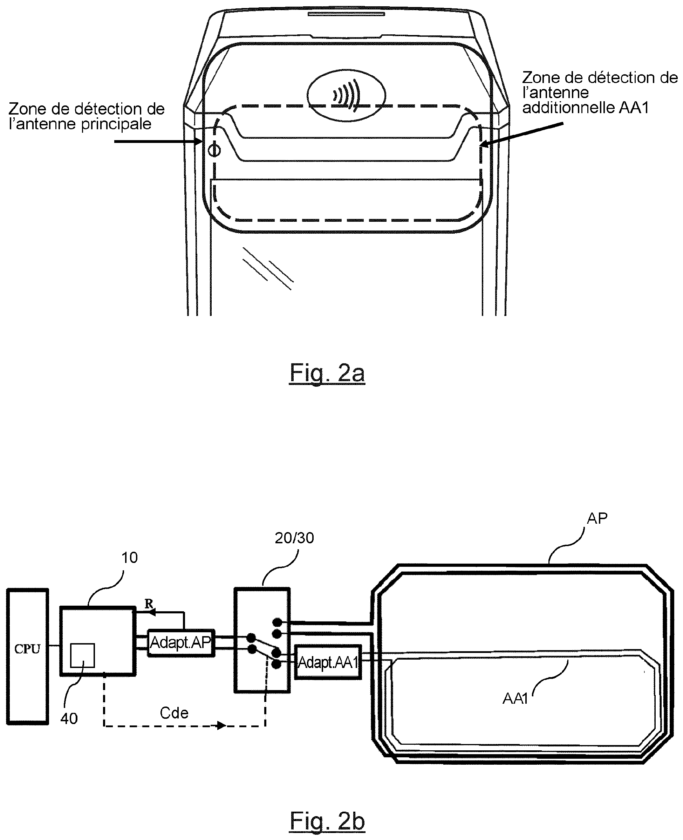

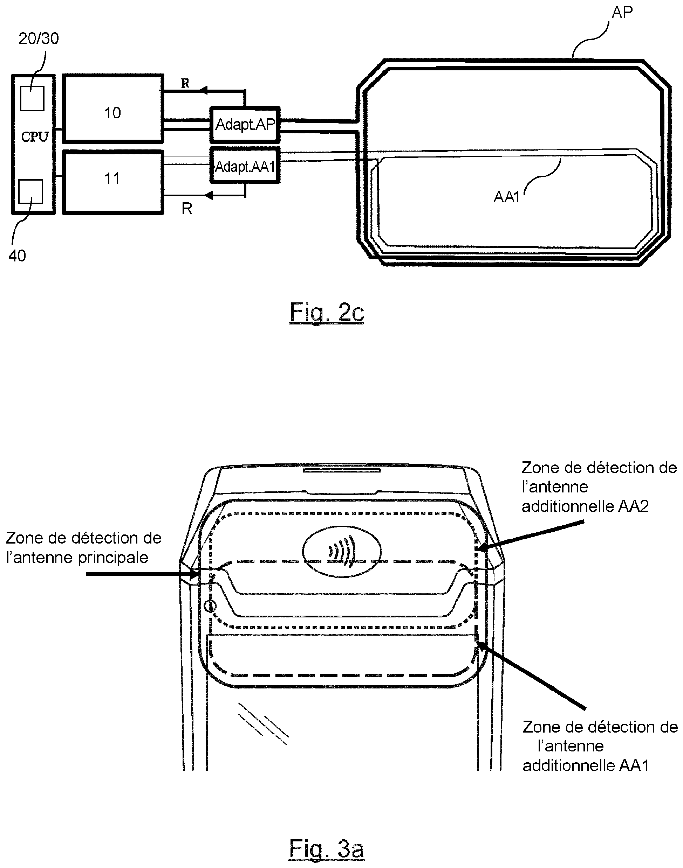

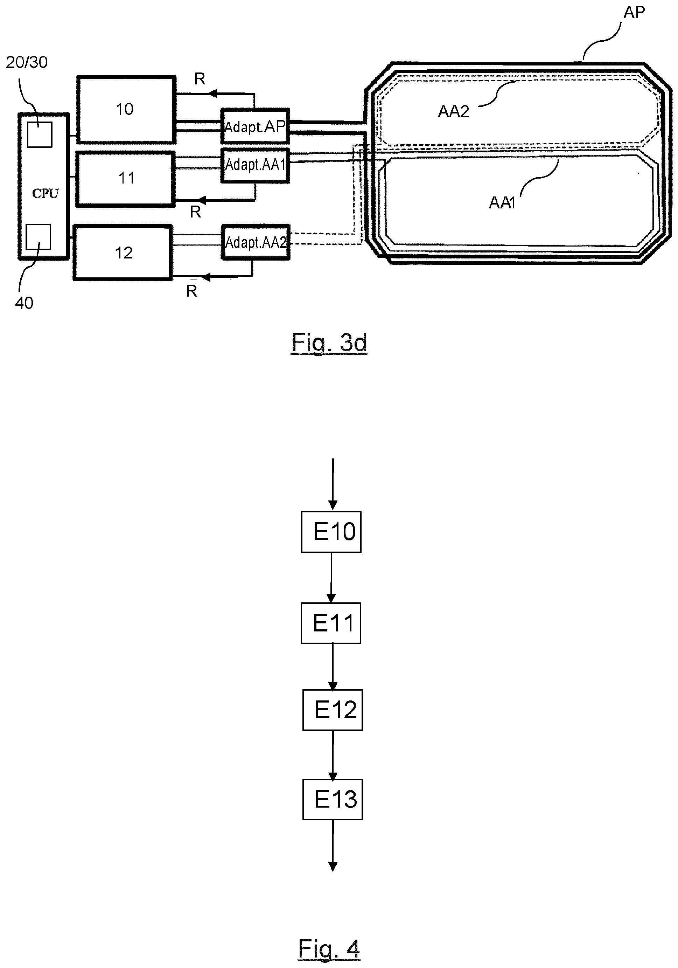

Ceci est donc possible grâce aux antennes additionnelles et à la sélection des signaux reçus de ces différents antennes, tout en respectant la norme et les délais requis pour un paiement sans contact, car le temps de traitement des signaux reçus par la ou les antennes additionnelles avant de basculer sur le traitement des signaux reçus par l'antenne principale de paiement sans contact est suffisamment court pour pouvoir initier ensuite le paiement sans contact dans les délais requis par la norme. On décrit maintenant les différents modes de réalisation et leurs variantes de réalisation, en relation avec les figures Fig 2aà **Fig 3d****,** ainsi que les principales étapes du procédé de détection d'un mode de paiement électronique en relation avec la figure **Fig 4****.**

Les figures Fig 2a à Fig 2c illustrent un premier mode de réalisation, dans lequel le terminal de paiement électronique comprend une antenne additionnelle de détection AA1, implantée de telle sorte que sa zone de détection (illustrée en tirets noirs) soit incluse dans la zone de détection de l'antenne principale sans contact AP (illustrée en trait continu noir) comme sur la figure **Fig 2a****.**

Cette implantation permet en effet de s'assurer que, si le niveau des signaux reçus par cette première antenne additionnelle AA1 dépasse un premier seuil prédéterminé, alors la carte de paiement de l'utilisateur est bien en approche pour un paiement sans contact. En effet, si la carte était en approche pour un des deux autres modes de paiements par lecteurs de carte à puce ou de piste magnétique, la première antenne additionnelle AA1 ne détecterait pas de signaux assez forts. Il convient donc d'une part que l'antenne soit avantageusement implantée dans le terminal de paiement électronique, ainsi que par rapport à l'antenne principale AP, et qu'elle soit avantageusement paramétrée de sorte à être apte à recevoir les signaux d'une carte à puce en approche.

Ainsi, comme illustré notamment sur les figures **Fig 2b** et **Fig 2c****,** cette première antenne additionnelle AA1 est plus petite que l'antenne principale AP et présente un champ plus faible, sans obligation ou nécessité de respecter les exigences EMV. En effet, cette première antenne additionnelle AA1 n'est pas destinée à mettre en oeuvre une fonctionnalité de paiement sans contact, mais est utilisée uniquement pour discriminer le mode de paiement choisi par l'utilisateur, c'est-à-dire pour détecter un niveau de signal suffisant en provenance d'une carte de paiement en approche du terminal de paiement électronique.

Deux variantes de mise en œuvre sont maintenant décrites pour ce mode de réalisation à une antenne additionnelle, notamment pour ce qui est de l'implémentation technique de la sélection des signaux reçus de l'antenne principale et de l'antenne additionnelle.

La première variante, illustrée sur la figure **Fig 2b****,** consiste à mettre en oeuvre un commutateur analogique 20 (ou switch en anglais) à deux voies pour sélectionner quelle antenne parmi la première antenne additionnelle 1 et l'antenne principale AP est utilisée. Un tel commutateur est un composant électronique connu et non décrit plus en détail dans la présente demande de brevet. Ainsi, non seulement le commutateur 20 permet de sélectionner les signaux reçus de l'antenne principale AAP ou de la première antenne additionnelle AA1, avant leur traitement par le module de contrôle et traitement sans contact 10 existant (module en charge classiquement du traitement du signal de l'antenne principale AP), mais le commutateur 20 désinhibe/désactive l'antenne principale AP qui ne peut alors pas dialoguer avec une carte de paiement en approche du terminal de paiement électronique. Le commutateur 20 joue donc également le rôle des moyens de désactivation 30 de l'antenne principale AP.

Ainsi, selon cette première variante, le commutateur analogique 20 sélectionne, au démarrage du terminal de paiement électronique, la première antenne additionnelle 1. Ainsi, cette dernière crée un champ magnétique suffisant pour activer une carte de paiement électronique en approche du terminal de paiement électronique et recevoir un signal en provenance de cette carte de paiement électronique. Ensuite, le niveau du signal reçu (noté R sur les figures) par la première antenne additionnelle 1 est comparé, de manière périodique par exemple, à un seuil prédéterminé SI. Cette comparaison est mise en œuvre par des moyens de comparaison 40 implémentés dans le module de contrôle et traitement sans contact 10, lequel commande ensuite le commutateur 20 : si le niveau de signal reçu sur la première antenne additionnelle 1 correspond à une approche de la carte pour un paiement sans contact, alors le commutateur 20 bascule sur la réception des signaux reçus par l'antenne principale AP pour un paiement sans contact. Dans ce cas, le commutateur 20 joue donc également le rôle des moyens d'activation 30 de l'antenne principale AP, et de désactivation de la première antenne additionnelle 1.

Sinon, la fonctionnalité sans contact n'est pas activée, et le paiement par lecture de la carte à puce ou de la piste magnétique est mis en œuvre, selon que l'utilisateur insère sa carte dans le lecteur de carte à puce ou la fait coulisser dans le lecteur de piste magnétique.

Il est à noter que, lorsque la première antenne additionnelle 1 est utilisée, elle ne dialogue pas avec la carte à puce en approche (notamment car elle ne respecte pas les exigences de la norme EMV) mais sert uniquement à détecter le mode de paiement. Cela rend donc possible la désactivation temporaire de l'antenne principale AP, qui est la seule antenne apte à mettre en œuvre un paiement sans contact par dialogue avec une carte de paiement électronique. En particulier, cela est rendu possible par le fait que, selon la norme EMV, les exigences de rapidité de transaction sont à respecter à partir de l'instant de la réponse à la détection de la carte, instant qui n'est pas impacté par la mise en œuvre de la présente technique.

Il convient cependant que des réglages soient effectués, tant sur les paramètres de fonctionnement des antennes, que sur le seuil de détection S1, de manière à optimiser l'activation de l'antenne principale pour que celle-ci détecte la carte en approche et mette en œuvre le paiement sans contact selon les exigences de la norme EMV. Ces réglages dépendent donc des caractéristiques des antennes utilisées, ainsi que des exigences de la norme EMV en cours d'application, et peuvent être mis en œuvre au moment de la finalisation de l'architecture du terminal de paiement électronique, en vue des tests d'agrémentation à la norme. Ce type de réglage/paramétrage est connu. Ces considérations sont applicables à la deuxième variante de ce premier mode de réalisation, décrite ci-après, ainsi qu'aux différentes variantes du deuxième mode de réalisation.

Cette première variante met donc en œuvre un seul module de contrôle et traitement sans contact 10, ce qui représente un avantage en termes de coût de mise en œuvre de la présente technique. Ce module, connu, de contrôle et traitement sans contact 10, encore appelé « chip contactless » en anglais, met notamment en forme tous les signaux analogiques en sortie, pour les antennes (à une fréquence de 13,56 MegaHerz notamment pour le paiement sans contact), et commande le commutateur analogique 20. Un tel chip contactless décode également les signaux analogiques et les transforme en signaux numériques.

Par ailleurs, de manière connue également, des modules d'adaptation d'antenne Adapt.AP et Adapt.AA1 sont mis en œuvre pour améliorer le rayonnement des antennes, respectivement entre le commutateur 20 et le module de contrôle et traitement 10 pour l'adaptation à l'antenne principale et entre le commutateur 20 et la première antenne additionnelle 1 pour l'adaptation à cette dernière. Ces modules d'adaptation comprennent par exemple des condensateurs et des inductances, de manière connue et non détaillée ici.

Enfin, le processeur CPU correspond au processeur du terminal de paiement électronique et permet notamment de mener à bien une transaction, quel que soit le mode de paiement choisi. Un tel processeur n'est donc pas décrit en détail dans la présente demande de brevet.

Dans la deuxième variante, illustrée sur la figure **Fig 2c****,** c'est justement ce processeur CPU qui intègre les moyens de sélection 20 et les moyens d'activation et de désactivation 30 de l'antenne principale. Cette deuxième variante ne met donc pas en œuvre de commutateur analogique mais nécessite deux modules de contrôle et traitement sans contact 10 et 11, respectivement connectés à l'antenne principale AP et à la première antenne additionnelle AA1 Cette deuxième variante utilise donc une chaine de traitement et de transmission (comprenant notamment un module d'adaptation et un module de contrôle et traitement sans contact) dédiée à chacune des antennes. Selon cette deuxième variante, le processeur CPU commande, au démarrage du terminal de paiement électronique, le fonctionnement de la première antenne additionnelle 1, de manière à ce que cette dernière crée un champ magnétique suffisant pour activer une carte de paiement électronique en approche du terminal de paiement électronique et recevoir un signal en provenance de cette carte de paiement électronique. Pour ce faire, le processeur CPU sélectionne, via les moyens de sélection 20 (par exemple un ou plusieurs composants électroniques dédiés, pilotés par un ou plusieurs programmes), la chaine dédiée à la première antenne additionnelle AA1 (comprenant notamment le module d'adaptation d'antenne Adapt.AA1 et le module de contrôle et traitement sans contact 11). En parallèle, la chaine dédiée à l'antenne principale AP, c'est-à-dire le module d'adaptation d'antenne Adapt.AP et le module de contrôle et traitement sans contact 10, sont désactivés par les moyens de désactivation 30.

Ensuite, le niveau de signal reçu (noté R sur les figures) par la première antenne additionnelle 1 est comparé, de manière périodique par exemple, à un seuil prédéterminé S1. Cette comparaison est mise en œuvre par des moyens de comparaison 40 implémentés dans le processeur CPU. A l'issue de cette comparaison, si le niveau de signal reçu sur la première antenne additionnelle 1 correspond à une approche de la carte pour un paiement sans contact, alors le processeur CPU bascule sur la réception des signaux reçus par l'antenne principale AP pour un paiement sans contact. Dans ce cas, le processeur CPU joue donc également le rôle de moyens d'activation 30 de l'antenne principale AP (par exemple un ou plusieurs composants électroniques dédiés, pilotés par un ou plusieurs programmes) et de désactivation (par exemple un ou plusieurs composants électroniques dédiés, pilotés par un ou plusieurs programmes) de la première antenne additionnelle, par inhibition de la chaine qui lui est dédiée.

Sinon, la fonctionnalité sans contact n'est pas activée, et le paiement par lecture de la carte à puce ou de la piste magnétique est mis en œuvre, selon que l'utilisateur insère sa carte dans le lecteur de carte à puce ou la fait coulisser dans le lecteur de piste magnétique.

L'ajout d'une antenne additionnelle de détection permet donc de discriminer le mode de paiement en fonction de la détection de l'approche de la carte à puce de l'utilisateur, sans que la fonctionnalité sans contact ne se déclenche si le mode sans contact n'est pas choisi par l'utilisateur.

Les figures Fig 3a à Fig 3d illustrent un deuxième mode de réalisation, dans lequel le terminal de paiement électronique comprend une première antenne additionnelle de détection AA1, implantée de telle sorte que sa zone de détection (illustrée en tirets noirs) soit incluse dans la zone de détection de l'antenne principale sans contact AP (illustrée en trait continu noir), et une deuxième antenne additionnelle de détection AA2, implantée de telle sorte que sa zone de détection (illustrée en pointillés noirs) soit également incluse dans la zone de détection de l'antenne principale sans contact AP, comme sur la figure **Fig 3a****.**

Cette implantation permet d'utiliser la première antenne additionnelle AA1 pour détecter le mode de paiement sans contact, car elle est positionnée pour détecter une approche de la carte par le haut, et d'utiliser la deuxième additionnelle de détection AA2 pour confirmer un mode de paiement par lecture de la puce ou de la piste magnétique. En effet, le principe de ce deuxième mode de réalisation consiste à comparer, entre eux ou par rapport à des seuils prédéterminés, les niveaux des signaux reçus respectivement sur les deux antennes additionnelles afin de détecter dans quelle zone d'approche se situe la carte de paiement. Il convient donc d'une part que les antennes additionnelles soient avantageusement implantées dans le terminal de paiement électronique, ainsi que par rapport à l'antenne principale AP, et qu'elles soient avantageusement paramétrées de sorte à être aptes à recevoir les signaux d'une carte à puce en approche.

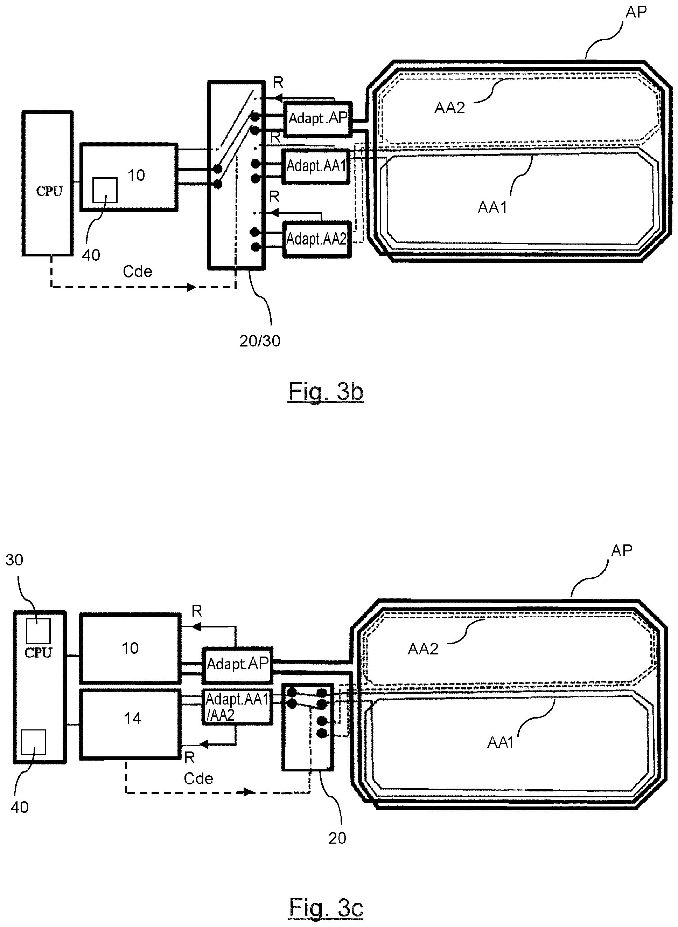

Ainsi, comme illustré notamment sur les figures **Fig 3b**à Fig 3d**,** les antennes additionnelles sont plus petites que l'antenne principale AP et présentent un champ plus faible, sans obligation ou nécessité de respecter les exigences EMV. En effet, ces antennes additionnelles ne sont pas destinées à mettre en oeuvre une fonctionnalité de paiement sans contact, mais sont utilisées uniquement pour discriminer le mode de paiement choisi par l'utilisateur, c'est-à-dire pour détecter un niveau de signal suffisant en provenance d'une carte de paiement en approche du terminal de paiement électronique.

Trois variantes de mise en œuvre sont maintenant décrites pour ce deuxième mode de réalisation à deux antennes additionnelles, notamment pour ce qui est de l'implémentation technique de la sélection des signaux reçus de l'antenne principale sans contact et des antennes additionnelles.

La première variante, illustrée sur la figure **Fig 3b****,** consiste à mettre en oeuvre un commutateur analogique 20 (ou switch en anglais) à trois voies, permettant de sélectionner une antenne parmi les deux antennes additionnelles AA1 et AA2 et l'antenne principale AP.

Le fonctionnement de cette première variante est similaire à celui de la première variante du premier mode de réalisation, décrite précédemment, le commutateur 20 permettant de sélectionner les signaux reçus de l'antenne principale AAP ou de la première antenne additionnelle AA1 ou de la deuxième antenne additionnelle AA2, avant leur traitement par le module de contrôle et traitement sans contact 10 existant (en charge classiquement du traitement du signal de l'antenne principale AP).

Le commutateur 20 joue également le rôle des moyens de désactivation 30 de l'antenne principale AP qui ne peut alors pas dialoguer avec une carte de paiement en approche du terminal de paiement électronique et de désactivation de l'une des deux antennes additionnelles non sélectionnée, ainsi que le rôle des moyens d'activation 30 de l'antenne principale AP, et de désactivation des antennes additionnelles lorsque le mode de paiement sans contact est détecté. Cette figure **Fig 3b** illustre un exemple d'agencement des antennes additionnelles AA1 et AA2 à l'intérieur de l'antenne principale AP, ainsi que les modules d'adaptation correspondants (déjà décrit en relation avec le premier mode de réalisation).

Selon cette première variante, le commutateur 20 permet donc de basculer d'une antenne à l'autre, en fonction du résultat de comparaison du niveau de signal reçu sur l'antenne sélectionnée, par rapport à un seuil. Ainsi, au démarrage du terminal de paiement électronique, le commutateur 20 est configuré pour sélectionner l'une ou l'autre des deux antennes additionnelles AA1 ou AA2, par exemple l'antenne AA2 (la plus apte à détecter une approche pour un paiement avec contact). Le signal reçu sur cette antenne est alors traité par le module de contrôle et traitement sans contact 10, qui effectue une comparaison du niveau de ce signal reçu avec un seuil prédéterminé S2. Cette comparaison peut par exemple se faire périodiquement, sur une durée donnée, par des moyens de comparaison 40. A l'issue de cette durée ou lorsque le seuil est dépassé, alors le module de contrôle et traitement sans contact 10 commande au commutateur 20 de basculer sur la première antenne additionnelle AA1, afin de confirmer ou d'infirmer le mode de paiement détecté via la deuxième antenne additionnelle AA2.

Ainsi, si le niveau de signal reçu sur cette antenne dépasse le seuil S2, un mode de paiement avec contact est détecté, et il est confirmé si le niveau de signal reçu par la première antenne additionnelle AA1 est inférieur à un seuil prédéterminé S1, cette comparaison étant également mise en œuvre par les moyens de comparaison 40 implémentés dans le module de contrôle et traitement sans contact 10. En effet, si l'antenne la plus apte à détecter un mode de paiement sans contact (la première antenne additionnelle AA1 selon ce mode de réalisation) ne reçoit pas ou peu de signal lorsqu'une carte est en approche du terminal de paiement électronique, cela signifie que la carte est en approche pour un paiement via l'un des deux lecteurs de carte (à puce ou à piste magnétique). Au contraire, si les deux antennes additionnelles reçoivent un signal suffisamment fort (i.e. respectivement au-dessus des seuils S1 et S2), cela indique une approche par le haut de la carte, pour un mode de paiement sans contact.

Il est également possible de sélectionner d'abord la première antenne additionnelle puis la deuxième, selon le même principe.

Il est à noter qu'une mesure différentielle des niveaux de signal reçu par les deux antennes additionnelles permet d'affiner le positionnement et l'approche de la carte de l'utilisateur, par exemple lorsque les signaux reçus sont trop proches des seuils prédéterminés utilisés pour les comparaisons. Par exemple, si un mode de paiement par lecteur est détecté (du fait du niveau de signal reçu sur l'antenne additionnelle AA2 et de la faiblesse ou de l'absence de signal reçu par la première antenne additionnelle AA1), il est possible de comparer les signaux reçus respectivement par ces deux antennes afin de s'assurer que la différence de niveau est significative et qu'une approche sans contact n'est pas envisagée. En revanche, si les niveaux des deux signaux reçus par les deux antennes additionnelles sont très proches, même inférieurs à un seuil pour l'un ou l'autre, il est probable qu'une approche pour un paiement sans contact soit à détecter.

La deuxième variante, illustrée sur la figure **Fig 3c****,** consiste également à mettre en oeuvre un commutateur analogique 20 (ou switch en anglais), à deux voies cependant, pour sélectionner l'une ou l'autre des deux antennes additionnelles AA1 et AA2. Ces 2 antennes additionnelles sont donc câblées sur une même chaîne de réception, avec un module de contrôle et traitement sans contact 14 propre, le commutateur 20 permettant d'utiliser séquentiellement les deux antennes additionnelles AA1 et AA2 (lesquelles sont également associées respectivement à un module d'adaptation comme déjà décrit ci-dessus).

De plus, comme pour la deuxième variante du premier mode de réalisation, une chaîne dédiée à l'antenne principale AP est mise en œuvre, avec un module de contrôle et traitement sans contact 10 dédié.

Comme pour la première variante de ce deuxième mode de réalisation, au démarrage du terminal de paiement électronique, le commutateur 20 est configuré pour sélectionner l'une ou l'autre des deux antennes additionnelles AA1 ou AA2, par exemple l'antenne AA2 (la plus apte à détecter une approche pour un paiement avec contact). C'est en revanche le processeur CPU qui implémente les moyens d'activation et de désactivation 30 de l'antenne principale (par exemple un ou plusieurs composants électroniques dédiés, pilotés par un ou plusieurs programmes).

Comme pour la première variante, le commutateur permet de basculer sur l'une des deux antennes additionnelles AA1 et AA2, par exemple en détectant d'abord un mode de paiement avec contact, via la deuxième antenne additionnelle AA2, puis le niveau de signal de la première antenne est analysé. S'il est supérieur au seuil SI, alors le mode de paiement sans contact est détecté, sinon, un autre mode de paiement est détecté. Les moyens d'activation 30 de l'antenne principale AP sont alors déclenchés ainsi que les moyens de désactivation des deux antennes additionnelles.

La troisième variante, illustrée sur la figure **Fig 3d****,** ne met pas en œuvre de commutateur mais implémente trois chaînes de réception dédiées sur lesquelles sont respectivement câblées les deux antennes additionnelles et l'antenne principale.

Trois modules de contrôle et traitement sans contact 10, 11 et 12 sont respectivement associés à l'antenne principale AP, la première antenne additionnelle AA1 et la deuxième antenne additionnelle AA2.

C'est donc le processeur CPU qui implémente les moyens 20 de sélection (par exemple un ou plusieurs composants électroniques dédiés, pilotés par un ou plusieurs programmes) de l'une des deux antennes additionnelles, uniquement pour de la détection car aucun dialogue n'est initié entre la carte et ses antennes, comme déjà indiqué ci-dessus. Ainsi, le niveau du signal reçu sur ces antennes additionnelles est analysé et comparé à des seuils prédéterminés : si une seule antenne détecte du signal, c'est le mode par lecteur de carte (à puce ou à piste magnétique) qui est détecté, alors que si les deux antennes additionnelles détectent du signal, c'est le mode sans contact qui est détecté. Le processeur CPU commande alors le basculement sur l'antenne principale et la désactivation des antennes additionnelles. C'est également le processeur CPU qui commande la désactivation de l'antenne principale au démarrage.

Le principe de ce deuxième mode de réalisation peut être reproduit avec plus de 2 antennes additionnelles, pour encore plus de précision et d'efficacité dans la détection d'un mode de paiement.

On décrit maintenant, en relation avec la figure **Fig 4****,** les principales étapes du procédé de détection d'un mode de paiement via une carte de paiement électronique et un terminal de paiement électronique tel que décrit ci-dessus selon les différents modes de réalisation, avec une ou deux antennes additionnelles de détection.

Au démarrage du terminal de paiement électronique, une étape de désactivation E10 de l'antenne principale est mise en œuvre, afin que la fonctionnalité de paiement sans contact ne se déclenche pas dès la détection d'un signal en provenance d'une carte en approche du terminal de paiement électronique. Une étape de sélection E11 de la première antenne additionnelle est donc également mise en œuvre, afin de pouvoir traiter le signal reçu via cette antenne.

Une première étape de comparaison E12 d'un niveau de signal reçu en provenance de la carte de paiement électronique par la première antenne additionnelle avec un premier seuil prédéterminé est ensuite mise en œuvre, périodiquement et/ou sur une durée prédéterminée. Si, à l'issue de cette durée, un premier résultat de comparaison négatif est délivré, alors un mode de paiement avec contact est détecté et l'antenne principale n'est pas réactivée.

En revanche, lorsque le niveau de signal est supérieur au seuil, un premier résultat de comparaison positif est délivré et une étape d'activation E13 de l'antenne principale est mise en œuvre pour initier une transaction sans contact entre le terminal de paiement électronique et la carte de paiement électronique.

Ce procédé de détection d'un mode de paiement est bien sûr adapté à tous les modes de réalisation techniques du terminal de paiement électronique et des antennes additionnelles décrits ci-dessus, avec la mise en œuvre d'étapes supplémentaires de sélection d'une deuxième antenne additionnelle et de deuxième comparaison du niveau du signal reçu par cette antenne notamment.

Ainsi, la solution décrite ci-dessus, selon les différents modes de réalisation, permet de détecter le mode de paiement choisi par l'utilisateur pendant l'approche de sa carte de paiement et sans déclencher la fonctionnalité de paiement sans contact lorsque cela n'a pas lieu d'être (i.e. lorsque l'utilisateur insère sa carte dans el lecteur de carte à puce ou la glisse dans le lecteur de carte à piste magnétique).

## Revendications

1. Terminal de paiement électronique comprenant un processeur (CPU), comprenant un premier lecteur de carte de paiement destiné à lire une carte à puce insérée dans le premier lecteur de carte de paiement pour un mode de paiement par lecture de la puce et/ou un deuxième lecteur de carte de paiement destiné à lire une carte à piste magnétique coulissée dans le deuxième lecteur de carte de paiement pour un mode de paiement par lecture de la piste magnétique, le terminal comprenant en outre au moins une antenne de paiement sans contact pour un mode de paiement sans contact, dite antenne principale (AP), **caractérisé en ce qu'**il comprend également une première antenne additionnelle (AA1), lesdites antennes étant aptes à recevoir un signal émis par une carte de paiement électronique, la première antenne additionnelle (AA1) étant implantée de telle sorte que sa zone de détection soit incluse dans la zone de détection de l'antenne de paiement sans contact, l'implantation de la première antenne additionnelle (AA1) étant telle que, si le niveau des signaux reçus de ladite carte de paiement électronique par la première antenne additionnelle (AA1) dépasse un premier seuil prédéterminé, ladite carte de paiement électronique est en approche pour le mode de paiement sans contact, en revanche, si la carte de paiement électronique est en approche pour le mode de paiement par lecture de la puce ou pour le mode de paiement par lecture de la piste magnétique, la première antenne additionnelle (AA1) ne détecte pas de signaux d'intensité suffisante de ladite carte de paiement électronique, la première antenne additionnelle (AA1) étant plus petite que l'antenne principale (AP) et présentant un champ plus faible, le terminal étant également **caractérisé en ce qu'**il comprend les moyens suivants
- des moyens d'activation et de désactivation (30) de ladite antenne principale (AP) ;
- des moyens de sélection (20) de ladite première antenne additionnelle (AA1) ;
- des moyens de comparaison (40), avec le premier seuil prédéterminé (S1), d'un niveau de signal reçu en provenance de ladite carte de paiement électronique par ladite première antenne additionnelle (AA1), lesdits moyens de comparaison délivrant un premier résultat de comparaison et déclenchant, si ledit premier résultat de comparaison est positif, lesdits moyens d'activation (30) de ladite antenne principale (AP) pour la mise en œuvre d'une transaction sans contact entre ledit terminal de paiement électronique et ladite carte de paiement électronique.

2. Terminal de paiement électronique selon la revendication 1, **caractérisé en ce que** lesdits moyens de sélection (20) et d'activation et de désactivation (30) de ladite antenne principale correspondent à un commutateur recevant en entrée un signal reçu par ladite première antenne additionnelle et un signal reçu par ladite antenne principale et délivrant en sortie l'un ou l'autre desdits signaux reçus par ladite première antenne additionnelle et par ladite antenne principale et **en ce que** lesdits moyens de comparaison (40) sont mis en œuvre dans au moins un module de contrôle et traitement sans contact (10) recevant en entrée l'un ou l'autre desdits signaux reçus par ladite première antenne additionnelle et par ladite antenne principale.

3. Terminal de paiement électronique selon la revendication 1, **caractérisé en ce qu'**il comprend en outre un deuxième module de contrôle et traitement sans contact (11) associé à ladite première antenne additionnelle et **en ce que** lesdits moyens de sélection (20) et d'activation et de désactivation (30) de ladite antenne principale (AP) sont mis en œuvre dans ledit processeur (CPU).

4. Terminal de paiement électronique selon la revendication 1, **caractérisé en ce qu'**il comprend en outre une deuxième antenne additionnelle (AA2) apte à recevoir un signal émis par ladite carte de paiement électronique, la deuxième antenne additionnelle (AA2) étant implantée de telle sorte que sa zone de détection soit incluse dans la zone de détection de l'antenne principale (AP), l'implantation de la première antenne additionnelle (AA1) et de la deuxième antenne additionnelle (AA2) permettant d'utiliser la première antenne additionnelle (AA1) pour détecter le mode de paiement sans contact, et permettant d'utiliser la deuxième antenne additionnelle (AA2) pour confirmer le mode de paiement par lecture de la puce ou le mode de paiement par lecture de la piste magnétique, la deuxième antenne additionnelle (AA2) étant plus petite que l'antenne principale (AP) et présentant un champ plus faible, le terminal étant également **caractérisé en ce que** lesdits moyens de sélection (20) sélectionnent la deuxième antenne additionnelle et lesdits moyens de comparaison (40) comparent un niveau de signal reçu en provenance de ladite carte de paiement électronique par ladite deuxième antenne additionnelle (AA2) avec un deuxième seuil prédéterminé délivrant un deuxième résultat de comparaison et déclenchant, si ledit deuxième résultat de comparaison est positif, lesdits moyens d'activation (30) de ladite antenne principale (AP) pour la mise en œuvre d'une transaction sans contact entre ledit terminal de paiement électronique et ladite carte de paiement électronique.

5. Terminal de paiement électronique selon la revendication 4, **caractérisé en ce que** lesdits moyens de sélection (20) et d'activation et de désactivation (30) de ladite antenne principale correspondent à un commutateur recevant en entrée un signal reçu par ladite première antenne additionnelle et un signal reçu par ladite deuxième antenne additionnelle et un signal reçu par ladite antenne principale et délivrant en sortie l'un ou l'autre desdits signaux reçus par ladite première antenne additionnelle, ladite deuxième antenne additionnelle ou ladite antenne principale et **en ce que** lesdits moyens de comparaison sont mis en œuvre dans au moins un module de contrôle et traitement sans contact (10) recevant en entrée l'un ou l'autre desdits signaux reçus par ladite première antenne additionnelle, ladite deuxième antenne additionnelle ou ladite antenne principale.

6. Terminal de paiement électronique selon la revendication 4, **caractérisé en ce qu'**il comprend en outre un deuxième module de contrôle (14) associé auxdites première et deuxième antennes additionnelles et **en ce que** lesdits moyens de sélection (20) et d'activation et de désactivation (30) de ladite antenne principale correspondent à un commutateur recevant en entrée un signal reçu par ladite première antenne additionnelle et un signal reçu par ladite deuxième antenne additionnelle et délivrant en sortie l'un ou l'autre desdits signaux reçus par ladite première antenne additionnelle ou ladite deuxième antenne additionnelle et **en ce que** lesdits moyens de comparaison (40) sont mis en œuvre dans ledit processeur (CPU).

7. Terminal de paiement électronique selon la revendication 4, **caractérisé en ce qu'**il comprend en outre un deuxième module de contrôle et traitement sans contact (11) associé à ladite première antenne additionnelle et un troisième module de contrôle et traitement sans contact (12) associé à ladite deuxième antenne additionnelle et **en ce que** lesdits moyens de sélection (20) et d'activation et de désactivation (30) de ladite antenne principale (AP) sont mis en œuvre dans ledit processeur (CPU).

8. Procédé de détection d'un mode de paiement électronique via une carte de paiement électronique et un terminal de paiement électronique, **caractérisé en ce que** ledit terminal de paiement électronique comprend un premier lecteur de carte de paiement destiné à lire une carte à puce insérée dans le premier lecteur de carte de paiement pour un mode de paiement par lecture de la puce et/ou un deuxième lecteur de carte de paiement destiné à lire une carte à piste magnétique coulissée dans le deuxième lecteur de carte de paiement pour un mode de paiement par lecture de la piste magnétique, le terminal comprenant en outre au moins une antenne de paiement sans contact, dite antenne principale, et une première antenne additionnelle, lesdites antennes étant aptes à recevoir un signal émis par ladite carte de paiement électronique, la première antenne additionnelle (AA1) étant implantée de telle sorte que sa zone de détection soit incluse dans la zone de détection de l'antenne de paiement sans contact, l'implantation de la première antenne additionnelle (AA1) étant telle que, si le niveau des signaux reçus de ladite carte de paiement électronique par la première antenne additionnelle (AA1) dépasse un premier seuil prédéterminé, ladite carte de paiement électronique est en approche pour le mode de paiement sans contact, en revanche, si la carte de paiement électronique est en approche pour le mode de paiement par lecture de la puce ou pour le mode de paiement par lecture de la piste magnétique, la première antenne additionnelle (AA1) ne détecte pas de signaux d'intensité suffisante de ladite carte de paiement électronique, la première antenne additionnelle (AA1) étant plus petite que l'antenne principale (AP) et présentant un champ plus faible, le procédé étant également **caractérisé en ce qu'**il comprend les étapes suivantes mises en œuvre dans ledit terminal de paiement électronique :
- une étape de désactivation (E10) de ladite antenne principale ;
- une étape de sélection (E11) de ladite première antenne additionnelle ;
- une première étape de comparaison (E12) d'un niveau de signal reçu en provenance de ladite carte de paiement électronique par ladite première antenne additionnelle avec le premier seuil prédéterminé délivrant un premier résultat de comparaison et, si ledit premier résultat de comparaison est positif, une étape d'activation (E13) de ladite antenne principale pour la mise en œuvre d'une transaction sans contact entre ledit terminal de paiement électronique et ladite carte de paiement électronique.

9. Procédé selon la revendication 8, **caractérisé en ce qu'**il comprend en outre une étape de désactivation de ladite première antenne additionnelle.

10. Procédé selon la revendication 8 ou la revendication 9, **caractérisé en ce que** ledit terminal de paiement électronique comprend en outre une deuxième antenne additionnelle apte à recevoir un signal émis par ladite carte de paiement électronique et **en ce que** ledit procédé comprend en outre une deuxième étape de comparaison d'un niveau de signal reçu en provenance de ladite carte de paiement électronique par ladite deuxième antenne additionnelle avec un deuxième seuil prédéterminé délivrant un deuxième résultat de comparaison, et **en ce que** ladite étape d'activation de ladite antenne principale pour la mise en œuvre d'une transaction sans contact entre ledit terminal de paiement électronique et ladite carte de paiement électronique est déclenchée si ledit deuxième résultat de comparaison est positif, la deuxième antenne additionnelle (AA2) étant implantée de telle sorte que sa zone de détection soit incluse dans la zone de détection de l'antenne principale (AP), l'implantation de la première antenne additionnelle (AA1) et de la deuxième antenne additionnelle (AA2) permettant d'utiliser la première antenne additionnelle (AA1) pour détecter le mode de paiement sans contact, et permettant d'utiliser la deuxième antenne additionnelle (AA2) pour confirmer le mode de paiement par lecture de la puce ou le mode de paiement par lecture de la piste magnétique, la deuxième antenne additionnelle (AA2) étant plus petite que l'antenne principale (AP) et présentant un champ plus faible.

11. Procédé selon la revendication 10, **caractérisé en ce qu'**il comprend en outre une étape de désactivation de ladite deuxième antenne additionnelle.

## Patentansprüche

1. Elektronisches Zahlungsendgerät, umfassend einen Prozessor (CPU), umfassend einen ersten Bezahlkartenleser zum Lesen einer Chipkarte, die für eine Zahlungsart durch Lesen des Chips in den ersten Bezahlkartenleser eingesteckt wird, und/oder einen zweiten Bezahlkartenleser zum Lesen einer Magnetstreifenkarte, die für eine Zahlungsart durch Lesen des Magnetstreifens durch den zweiten Bezahlkartenleser durchgezogen wird, wobei das Endgerät ferner mindestens eine kontaktlose Bezahlantenne für eine kontaktlose Zahlungsart umfasst, so genannte Hauptantenne (AP), **dadurch gekennzeichnet, dass** es ferner eine erste zusätzliche Antenne (AA1) umfasst, wobei die Antennen in der Lage sind, ein Signal zu empfangen, das durch eine elektronische Bezahlkarte ausgesendet wird, wobei die erste zusätzliche Antenne (AA1) so eingebaut ist, dass ihr Erkennungsbereich innerhalb des Erkennungsbereichs der kontaktlosen Bezahlantenne liegt, wobei der Einbau der ersten zusätzlichen Antenne (AA1) dergestalt ist, dass, wenn der Pegel der durch die erste zusätzliche Antenne (AA1) von der elektronischen Bezahlkarte empfangenen Signale einen vorher festgelegten ersten Schwellwert übersteigt, sich die elektronische Bezahlkarte für die kontaktlose Zahlungsart nähert, wohingegen, wenn sich die elektronische Bezahlkarte für die Zahlungsart durch Lesen des Chips oder für die Zahlungsart durch Lesen des Magnetstreifens nähert, die erste zusätzliche Antenne (AA1) keine Signale ausreichender Stärke von der elektronischen Bezahlkarte erkennt, wobei die erste zusätzliche Antenne (AA1) kleiner als die Hauptantenne (AP) ist und ein schwächeres Feld aufweist, wobei das Endgerät **dadurch gekennzeichnet ist, dass** es die folgenden Mittel umfasst:
- Mittel zum Aktivieren und zum Deaktivieren (30) der Hauptantenne (AP);
- Mittel zum Auswählen (20) der ersten zusätzlichen Antenne (AA1);
- Mittel zum Vergleichen (40), mit dem vorher festgelegten ersten Schwellwert (S1), eines Signalpegels, der durch die erste zusätzliche Antenne (AA1) von der elektronischen Bezahlkarte empfangen wird, wobei die Mittel zum Vergleichen ein erstes Vergleichsergebnis ausgeben und, wenn das erste Vergleichsergebnis positiv ist, die Mittel zum Aktivieren (30) der Hauptantenne (AP) für die Durchführung einer kontaktlosen Transaktion zwischen dem elektronischen Zahlungsendgerät und der elektronischen Bezahlkarte auslösen.

2. Elektronisches Zahlungsendgerät nach Anspruch 1, **dadurch gekennzeichnet, dass** die Mittel zum Auswählen (20) und zum Aktivieren und zum Deaktivieren (30) der Hauptantenne einem Schalter entsprechen, der eingangsseitig ein durch die erste zusätzliche Antenne empfangenes Signal und ein durch die Hauptantenne empfangenes Signal empfängt und ausgangsseitig das eine oder das andere der durch die erste zusätzliche Antenne und durch die Hauptantenne empfangenen Signale ausgibt, und dadurch, dass die Mittel zum Vergleichen (40) in mindestens einem kontaktlosen Steuerungs- und Verarbeitungs-Modul (10) implementiert sind, das eingangsseitig das eine oder das andere der durch die erste zusätzliche Antenne und durch die Hauptantenne empfangenen Signale empfängt.

3. Elektronisches Zahlungsendgerät nach Anspruch 1, **dadurch gekennzeichnet, dass** es ferner ein zweites kontaktloses Steuerungs- und Verarbeitungs-Modul (11) umfasst, das der ersten zusätzlichen Antenne zugeordnet ist, und dadurch, dass die Mittel zum Auswählen (20) und zum Aktivieren und zum Deaktivieren (30) der Hauptantenne (AP) in dem Prozessor (CPU) implementiert sind.

4. Elektronisches Zahlungsendgerät nach Anspruch 1, **dadurch gekennzeichnet, dass** es ferner eine zweite zusätzliche Antenne (AA2) umfasst, die in der Lage ist, ein Signal zu empfangen, das durch die elektronische Bezahlkarte ausgesendet wird, wobei die zweite zusätzliche Antenne (AA2) so eingebaut ist, dass ihr Erkennungsbereich innerhalb des Erkennungsbereichs der Hauptantenne (AP) liegt, wobei der Einbau der ersten zusätzlichen Antenne (AA1) und der zweiten zusätzlichen Antenne (AA2) die Verwendung der ersten zusätzlichen Antenne (AA1) zum Erkennen der kontaktlosen Zahlungsart gestattet und die Verwendung der zweiten zusätzlichen Antenne (AA2) zum Bestätigen der Zahlungsart durch Lesen des Chips oder der Zahlungsart durch Lesen des Magnetstreifens gestattet, wobei die zweite zusätzliche Antenne (AA2) kleiner ist als die Hauptantenne (AP) und ein schwächeres Feld aufweist, wobei das Endgerät ferner **dadurch gekennzeichnet ist, dass** die Mittel zum Auswählen (20) die zweite zusätzliche Antenne auswählen und die Mittel zum Vergleichen (40) einen Signalpegel, der durch die zweite zusätzliche Antenne (AA2) von der elektronischen Bezahlkarte empfangen wird, mit einem vorher festgelegten zweiten Schwellwert vergleichen, wobei sie ein zweites Vergleichsergebnis ausgeben und, wenn das zweite Vergleichsergebnis positiv ist, die Mittel zum Aktivieren (30) der Hauptantenne (AP) für die Durchführung einer kontaktlosen Transaktion zwischen dem elektronischen Zahlungsendgerät und der elektronischen Bezahlkarte auslösen.

5. Elektronisches Zahlungsendgerät nach Anspruch 4, **dadurch gekennzeichnet, dass** die Mittel zum Auswählen (20) und zum Aktivieren und zum Deaktivieren (30) der Hauptantenne einem Schalter entsprechen, der eingangsseitig ein durch die erste zusätzliche Antenne empfangenes Signal und ein durch die zweite zusätzliche Antenne empfangenes Signal und ein durch die Hauptantenne empfangenes Signal empfängt und ausgangsseitig das eine oder das andere der durch die erste zusätzliche Antenne, die zweite zusätzliche Antenne oder die Hauptantenne empfangenen Signale ausgibt, und dadurch, dass die Mittel zum Vergleichen in mindestens einem kontaktlosen Steuerungs- und Verarbeitungs-Modul (10) implementiert sind, das eingangsseitig das eine oder das andere der durch die erste zusätzliche Antenne, die zweite zusätzliche Antenne oder die Hauptantenne empfangenen Signale empfängt.

6. Elektronisches Zahlungsendgerät nach Anspruch 4, **dadurch gekennzeichnet, dass** es ferner ein zweites Steuerungs-Modul (14) umfasst, das der ersten und zweiten zusätzlichen Antenne zugeordnet ist, und dadurch, dass die Mittel zum Auswählen (20) und zum Aktivieren und zum Deaktivieren (30) der Hauptantenne einem Schalter entsprechen, der eingangsseitig ein durch die erste zusätzliche Antenne empfangenes Signal und ein durch die zweite zusätzliche Antenne empfangenes Signal empfängt und ausgangsseitig das eine oder das andere der durch die erste zusätzliche Antenne oder die zweite zusätzliche Antenne empfangenen Signale ausgibt, und dadurch, dass die Mittel zum Vergleichen (40) in dem Prozessor (CPU) implementiert sind.

7. Elektronisches Zahlungsendgerät nach Anspruch 4, **dadurch gekennzeichnet, dass** es ferner ein zweites kontaktloses Steuerungs- und Verarbeitungs-Modul (11), das der ersten zusätzlichen Antenne zugeordnet ist, und ein drittes kontaktloses Steuerungs- und Verarbeitungs-Modul (12), das der zweiten zusätzlichen Antenne zugeordnet ist, umfasst, und dadurch, dass die Mittel zum Auswählen (20) und zum Aktivieren und zum Deaktivieren (30) der Hauptantenne (AP) in dem Prozessor (CPU) implementiert sind.

8. Verfahren zum Erkennen einer elektronischen Zahlungsart über eine elektronische Bezahlkarte und ein elektronisches Zahlungsendgerät, **dadurch gekennzeichnet, dass** das elektronische Zahlungsendgerät einen ersten Bezahlkartenleser zum Lesen einer Chipkarte, die für eine Zahlungsart durch Lesen des Chips in den ersten Bezahlkartenleser eingesteckt wird, und/oder einen zweiten Bezahlkarten-Leser zum Lesen einer Magnetstreifenkarte, die für eine Zahlungsart durch Lesen des Magnetstreifens durch den zweiten Bezahlkartenleser durchgezogen wird, umfasst, wobei das Endgerät ferner mindestens eine kontaktlose Bezahlantenne, so genannte Hauptantenne, und eine erste zusätzliche Antenne umfasst, wobei die Antennen in der Lage sind, ein Signal zu empfangen, das durch die elektronische Bezahlkarte ausgesendet wird, wobei die erste zusätzliche Antenne (AA1) so eingebaut ist, dass ihr Erkennungsbereich innerhalb des Erkennungsbereichs der kontaktlosen Bezahlantenne liegt, wobei der Einbau der ersten zusätzlichen Antenne (AA1) dergestalt ist, dass, wenn der Pegel der von der elektronischen Bezahlkarte durch die erste zusätzliche Antenne (AA1) empfangenen Signale einen vorher festgelegten ersten Schwellwert übersteigt, sich die elektronische Bezahlkarte für die kontaktlose Zahlungsart nähert, wohingegen, wenn sich die elektronische Bezahlkarte für die Zahlungsart durch Lesen des Chips oder für die Zahlungsart durch Lesen des Magnetstreifens nähert, die erste zusätzliche Antenne (AA1) keine Signale ausreichender Stärke von der elektronischen Bezahlkarte erkennt, wobei die erste zusätzliche Antenne (AA1) kleiner als die Hauptantenne (AP) ist und ein schwächeres Feld aufweist, wobei das Verfahren ferner **dadurch gekennzeichnet ist, dass** es die folgenden Schritte umfasst, die in dem elektronischen Zahlungsendgerät ausgeführt werden:
- einen Schritt des Deaktivierens (E10) der Hauptantenne;
- einen Schritt des Auswählens (E11) der ersten zusätzlichen Antenne;
- einen ersten Schritt des Vergleichens (E12) eines Signalpegels, der durch die erste zusätzliche Antenne von der elektronischen Bezahlkarte wird, mit dem vorher festgelegten ersten Schwellwert, wobei ein erstes Vergleichsergebnis ausgeben wird und, wenn das erste Vergleichsergebnis positiv ist, einen Schritt des Aktivierens (E13) der Hauptantenne für die Durchführung einer kontaktlosen Transaktion zwischen dem elektronischen Zahlungsendgerät und der elektronischen Bezahlkarte.

9. Verfahren nach Anspruch 8, **dadurch gekennzeichnet, dass** es ferner einen Schritt des Deaktivierens der ersten zusätzlichen Antenne umfasst.

10. Verfahren nach Anspruch 8 oder Anspruch 9, **dadurch gekennzeichnet, dass** das elektronische Zahlungsendgerät ferner eine zweite zusätzliche Antenne umfasst, die in der Lage ist, ein Signal zu empfangen, das durch die elektronische Bezahlkarte ausgesendet wird, und dadurch, dass das Verfahren ferner einen zweiten Schritt des Vergleichens eines Signalpegels, der durch die zweite zusätzliche Antenne von der elektronischen Bezahlkarte empfangen wird, mit einem vorher festgelegten zweiten Schwellwert umfasst, wobei ein zweites Vergleichsergebnis ausgeben wird, und dadurch, dass der Schritt des Aktivierens des Aktivierens der Hauptantenne für die Durchführung einer kontaktlosen Transaktion zwischen dem elektronischen Zahlungsendgerät und der elektronischen Bezahlkarte ausgelöst wird, wenn das zweite Vergleichsergebnis positiv ist, wobei die zweite zusätzliche Antenne (AA2) so eingebaut ist, dass ihr Erkennungsbereich innerhalb des Erkennungsbereichs der Hauptantenne (AP) liegt, wobei der Einbau der ersten zusätzlichen Antenne (AA1) und der zweiten zusätzlichen Antenne (AA2) die Verwendung der ersten zusätzlichen Antenne (AA1) zum Erkennen der kontaktlosen Zahlungsart gestattet und die Verwendung der zweiten zusätzlichen Antenne (AA2) zum Bestätigen der Zahlungsart durch Lesen des Chips oder der Zahlungsart durch Lesen des Magnetstreifens gestattet, wobei die zweite zusätzliche Antenne (AA2) kleiner ist als die Hauptantenne (AP) und ein schwächeres Feld aufweist.

11. Verfahren nach Anspruch 10, **dadurch gekennzeichnet, dass** es ferner einen Schritt des Deaktivierens der zweiten zusätzlichen Antenne umfasst.

## Claims

1. An electronic payment terminal comprising a processor (CPU), comprising a first payment card reader for reading a smart card inserted into the first payment card reader for a chipbased payment mode and/or a second payment card reader for reading a magnetic stripe card swiped through the second payment card reader for a magnetic stripe-based payment mode, the terminal further comprising at least one contactless payment antenna for a contactless payment mode, referred to as the main antenna (AP), **characterised in that** it also comprises a first additional antenna (AA1), said antennas being capable of receiving a signal emitted by an electronic payment card, the first additional antenna (AA1) being positioned such that its detection zone is included within the detection zone of the contactless payment antenna, the positioning of the first additional antenna (AA1) being such that, if the level of the signals received from said electronic payment card by the first additional antenna (AA1) exceeds a first predetermined threshold, said electronic payment card is approaching for contactless payment mode; conversely, if the electronic payment card is approaching for chip-reading payment mode or for magnetic stripe-reading payment mode, the first additional antenna (AA1) does not detect signals of sufficient strength from said electronic payment card, the first additional antenna (AA1) being smaller than the main antenna (AP) and having a weaker field, the terminal being further **characterised in that** it comprises the following means:
- means (30) for activating and deactivating said main antenna (AP);
- means (20) for selecting said first additional antenna (AA1);
- means (40) for comparing a signal level received from said electronic payment card by said first additional antenna (AA1) with the first predetermined threshold (S1), said comparison means delivering a first comparison result and, if said first comparison result is positive, triggering said activation means (30) for said main antenna (AP) to implement a contactless transaction between said electronic payment terminal and said electronic payment card.

2. An electronic payment terminal according to claim 1, **characterised in that** said means (20) for selecting and activating and deactivating (30) said main antenna correspond to a switch receiving as input a signal received by said first additional antenna and a signal received by said main antenna and outputting one or the other of said signals received by said first additional antenna and by said main antenna, and **in that** said comparison means (40) are implemented in at least one contactless control and processing module (10) receiving as input one or the other of said signals received by said first additional antenna and by said main antenna.

3. An electronic payment terminal according to claim 1, **characterised in that** it further comprises a second contactless control and processing module (11) associated with said first additional antenna, and **in that** said means for selecting (20) and activating and deactivating (30) said main antenna (AP) are implemented in said processor (CPU).

4. An electronic payment terminal according to claim 1, **characterised in that** it further comprises a second additional antenna (AA2) capable of receiving a signal transmitted by said electronic payment card, the second additional antenna (AA2) being positioned such that its detection zone is included within the detection zone of the main antenna (AP), the positioning of the first additional antenna (AA1) and the second additional antenna (AA2) enabling the first additional antenna (AA1) to be used to detect the contactless payment mode, and enabling the second additional antenna (AA2) to be used to confirm the chip-reading payment mode or the magnetic stripe-reading payment mode, the second additional antenna (AA2) being smaller than the main antenna (AP) and having a weaker field, the terminal being further **characterised in that** said selection means (20) select the second additional antenna and said comparison means (40) compare a signal level received from said electronic payment card by said second additional antenna (AA2) with a second predetermined threshold, thereby providing a second comparison result and, if said second comparison result is positive, triggering said activation means (30) of said main antenna (AP) to implement a contactless transaction between said electronic payment terminal and said electronic payment card.

5. An electronic payment terminal according to claim 4, **characterised in that** said selection means (20) and activation and deactivation means (30) for said main antenna correspond to a switch receiving as input a signal received by said first additional antenna, a signal received by said second additional antenna and a signal received by said main antenna, and outputting one or the other of said signals received by said first additional antenna, said second additional antenna or said main antenna, and **in that** said comparison means are implemented in at least one contactless control and processing module (10) receiving as input one or other of said signals received by said first additional antenna, said second additional antenna or said main antenna.

6. Electronic payment terminal according to claim 4, **characterised in that** it further comprises a second control module (14) associated with said first and second additional antennas, and **in that** said selection means (20) and activation and deactivation means (30) of said main antenna correspond to a switch receiving as input a signal received by said first additional antenna and a signal received by said second additional antenna and outputting one or the other of said signals received by said first additional antenna or said second additional antenna, and **in that** said comparison means (40) are implemented in said processor (CPU).

7. An electronic payment terminal according to claim 4, **characterised in that** it further comprises a second contactless control and processing module (11) associated with said first additional antenna and a third contactless control and processing module (12) associated with said second additional antenna, and **in that** said selection (20) and activation and deactivation means (30) for said main antenna (AP) are implemented in said processor (CPU).

8. A method for detecting an electronic payment mode via an electronic payment card and an electronic payment terminal, **characterised in that** said electronic payment terminal comprises a first payment card reader for reading a smart card inserted into the first payment card reader for a payment mode by reading the chip and/or a second payment card reader designed to read a magnetic stripe card swiped through the second payment card reader for a payment mode involving reading the magnetic stripe, the terminal further comprising at least one contactless payment antenna, referred to as the main antenna, and a first additional antenna, said antennas being capable of receiving a signal emitted by said electronic payment card, the first additional antenna (AA1) being positioned such that its detection zone is included within the detection zone of the contactless payment antenna, the positioning of the first additional antenna (AA1) being such that, if the level of the signals received from said electronic payment card by the first additional antenna (AA1) exceeds a first predetermined threshold, said electronic payment card is approaching for contactless payment mode; conversely, if the electronic payment card is approaching for chip-reading payment mode or for magnetic stripe-reading payment mode, the first additional antenna (AA1) does not detect signals of sufficient strength from said electronic payment card, the first additional antenna (AA1) being smaller than the main antenna (AP) and having a weaker field, the method being further **characterised in that** it comprises the following steps implemented in said electronic payment terminal:
- a step of deactivating (E10) said main antenna;
- a step (E11) of selecting said first additional antenna;
- a first step (E12) of comparing a signal level received from said electronic payment card by said first additional antenna with the first predetermined threshold, yielding a first comparison result; and, if said first comparison result is positive, a step (E13) of activating said main antenna to carry out a contactless transaction between said electronic payment terminal and said electronic payment card.

9. A method according to claim 8, **characterised in that** it further comprises a step of deactivating said first additional antenna.

10. A method according to claim 8 or claim 9, **characterised in that** said electronic payment terminal further comprises a second additional antenna capable of receiving a signal transmitted by said electronic payment card and **in that** said method further comprises a second step of comparing a signal level received from said electronic payment card by said second additional antenna with a second predetermined threshold, yielding a second comparison result, and **in that** said step of activating said main antenna to carry out a contactless transaction between said electronic payment terminal and said electronic payment card is triggered if said second comparison result is positive, the second additional antenna (AA2) being positioned such that its detection zone is included within the detection zone of the main antenna (AP), the positioning of the first additional antenna (AA1) and the second additional antenna (AA2) enabling the first additional antenna (AA1) to be used to detect the contactless payment mode, and enabling the second additional antenna (AA2) to be used to confirm the chip-reading payment mode or the magnetic stripe-reading payment mode, the second additional antenna (AA2) being smaller than the main antenna (AP) and having a weaker field.

11. A method according to claim 10, **characterised in that** it further comprises a step of deactivating said second additional antenna.
